# EUROPEAN PATENT APPLICATION

(11) **EP 1 271 288 A2**
(43) Date of publication of application: **02.01.2003**
(21) Application number: 02254334.2
(22) Date of filing: 20.06.2002
(51) Int. Cl.: G06F 1/16

(54) **Portable digital device**

(30) Priority: 29.06.2001 US 893978
(71) Applicant: Nokia Corporation, 02150 Espoo (FI)
(72) Inventor: Davidson, Brian, Woking, Surrey GU21 3QD (GB); Mote, Steven, Musgrove, Somerset BA9 8EX (GB); Lander, Ronald, Calabasas, CA 91302 (US); Newstead, Robert, Frimley, Surrey GU16 5XT (GB); Fisher, David, Amersham, Buckinghamshire HP7 0AF (GB)
(74) Representative: Johnson, Ian Michael

(57) **Abstract**

The present invention provides a portable digital device comprising one or more movement sensors arranged to detect directional movement of the digital device, and wherein the digital device is further arranged to perform a display operation on an image displayed on a viewing screen based on the directional movement of the digital device detected by the or each movement sensor.

## Description

The invention relates generally to the field of portable digital devices arranged to control and provide diagrammatic and/or textual information to a user. The provision of information to a user may be via a display screen, or monitor, which is part of the device. However, the provision of information may be via a display screen which is separate to the portable device. It should be borne in mind that although the term portable includes hand held devices, it is not necessarily limited to such devices. For example, the device may be attached to a users' forearm or the back of a user's hand.

One example of a portable digital device within the scope of the invention is a remote control for a monitor, such as that for a television. In this case, the digital device is a hand held device which does have a display screen, but which is arranged to control information displayed on a separate television monitor. The monitor may be one suitable for displaying analogue/digital television signals and/or digital computer signals.

Another example of a portable digital device within the scope of the invention is a hand held mobile communications device, such as a mobile phone, which itself has a display screen and which, in operation, provides a user with menu options for selection. Also included are portable digital devices which have their own integrated display screens and which are arranged to provide a user with a landscape map to ease navigation of a user around an unfamiliar area. Such examples are particularly suitable for use on the move and the following discussion of the prior art will relate to such devices.

Digital devices are being developed for use on the move, and there is an increasing drive to miniaturise these devices. However, the drive for miniaturisation needs to be balanced against ease of use of the device. For example, a relatively small device will have a comparatively small viewing screen and would therefore not be particularly suitable for displaying large graphical images or lengthy textual documents. Furthermore, with small digital devices being increasingly used to view relatively complex information, such as detailed graphical images, comparatively expensive high resolution screens are required to display the detailed graphical images with sufficient clarity at the reduced viewing screen size.

Portable digital devices often interface with digital information sources, such as Internet Servers. Although these digital information sources can interface with digital devices having any particular viewing screen size, the digital information sources are arranged to provide the information in the form of a digital image sized to suit a specific comparatively large screen size. Therefore, when interfacing with a digital device having a comparatively small screen, some of the image may not displayed until the image is shifted to an appropriate position on the screen. For example, a particular WebPage stored on an Internet Server may be designed to be viewed in its entirety on a screen size of 17 inches (approx. 430 mm). When such a large image is viewed using a small screen, such as one which may be present in a mobile phone, only a small portion of the image will initially be displayed. The rest of the image can be progressively viewed by shifting the image across the screen, this being done by the operation of scroll keys/rollers. Although such operations are widely accepted, they can be considered bothersome.

In certain cases, rather than have a user scroll through a large image, which often contains additional information such as advertising banners, the image is specifically modified for display on a small screen e.g. as in the case of WAP services. Not only does this modification result in additional work but may also result in the loss of advertising revenue from the removal of such additional information.

Some portable digital devices store large volumes of information for immediate access by a user, and other portable digital devices do not store the information but are arranged to download the information on demand. Comparatively large user operating areas are required in all such cases to provide a user with the ability to easily handle the comparatively large volumes of information provided. This is because each piece of information will occupy a finite display space, and accordingly proportionally increasing amounts of user display space will be required to display all the information at a readily viewable size. Furthermore, the more information that a user has access to, the greater the need for the information to be arranged in a logical hierarchical manner so that the user can readily locate the information. As a user navigates through the hierarchy, it is likely that increasing amounts of information will be displayed which will require a comparatively large user interface area to display all the information.

As the size of portable digital devices are reduced, user input keys will occupy a proportionally large amount of space: on the devices. This is because the keys still need to be sufficiently large so that they can be easily operated by a user, ideally using the user's finger, and thereby such a requirement limits the reduction in key size. Furthermore, the amount of space available for user input keys would be particularly limited in small portable digital devices as it would be more beneficial to provide a comparatively large display screen than occupy space on such a small device by having a plurality of keys.

The present invention aims to address the above mentioned challenges to and shortfalls of the prior art.

Accordingly, the present invention provides a portable digital device comprising one or more movement sensors arranged to detect directional movement of the digital device, and wherein the digital device is further arranged to perform a display operation on an image displayed on a viewing screen based on the directional movement of the digital device detected by the or each movement sensor.

Thus, directional movement of the device itself controls display operations on a viewing screen and advantageously display operations do not require keypad operations. Advantageously, this reduces the requirement for keys to control display operations and accordingly frees up space on the portable device.

The viewing screen may be part of the portable digital device or may be peripheral to it. In the case of the viewing screen being part of the device, the reduced requirement for keys to control display operations may be advantageously used to provide a larger viewing screen.

In one embodiment, the display operation performed is a scrolling operation. In such a case, one or more movement sensors of the digital device are arranged to detect X/Y directional movements of the device and correspondingly scroll the image on the viewing screen in an appropriate direction. This may be such that an X direction movement of the device in one particular direction corresponds with an X direction scrolling of the image in that particular direction, and movement in an opposing X direction corresponds with scrolling of the image in the opposing X direction. Alternatively, the device may be arranged such that an X direction movement corresponds with Y direction scrolling.

Thus, movement of the device in X/Y directions will scroll the image across the viewing screen in corresponding X/Y directions. Such an arrangement mimics human viewing of a large area, and thereby will allow progressive intuitive viewing of a large image. With intuitive scrolling making manipulation of a comparatively large image on a viewing screen a simple matter, there is no requirement to specially adapt large images for viewing on a small screen. In addition, the intuitive operation of such a device will ease the requirement of large user operating areas. Furthermore, the use of movement sensors to control scrolling obviates the requirement for scrolling keys on the digital device and thus frees up space on the digital device, for example, for an increased size viewing screen. The requirement for bothersome control of scrolling using key operations is obviated.

In this embodiment, movement sensors may be provided to detect X or Y direction movements solely, singly (one at a time), or in combination. In the case of detecting X and Y movements in combination, scrolling will not be limited to separate scrolling in each orthogonal direction, but will provide general panning in any direction in the X/Y plane.

In another embodiment, the portable digital device is arranged to comprise one or more Z direction movement sensors arranged to detect changes in the Z plane position of the digital device and correspondingly zoom in and/or out on the viewing screen image based on the change in the Z plane position of the digital device detected by the or each Z direction movement sensor.

Such a device presents a user with an intuitive way of viewing images, particularly when viewing detailed graphical images using a small viewing screen. For example, a user can intuitively zoom in on an image by bringing the device towards the user (i.e. movement in the Z direction), or vice versa. Accordingly, the intuitive control of magnification obviates the requirement for expensive high resolution viewing screens which would be required to view detailed graphical images.

In a further embodiment, the digital device comprises one or more Z direction movement sensors arranged to detect changes in the Z plane position of the digital device and arranged to scroll the image on the viewing screen in the X/Y direction based on the change in the Z plane of the digital device detected by the or each Z direction movement sensor.

Such a device makes use of Z direction movements to control X/Y direction scrolling and thus obviates the requirement for a specific key for scrolling, and frees up space on the digital device.

As an example, one Z direction movement sensor may be used to control X plane scrolling such that a movement towards a user scrolls the image in one X direction, and a movement away from the user scrolls the image in the alternate X direction. Similarly, a Z direction movement sensor may be provided to control Y plane scrolling. These two embodiments may be combined by providing one Z direction movement sensor to control X direction scrolling and by providing another Z direction movement sensor to control Y direction scrolling, and by further providing one or more key/voice command actuators to allow a user to switch between the two X/Y scrolling directions. Alternatively, the same Z plane movement sensor can be used control X or Y direction scrolling, and one or more key/voice command actuators provided to switch the operation of the Z direction movement sensor between controlling X and Y direction scrolling.

One or more of the movement sensors may be arranged to detect translational movements only. Alternatively, one or more of the movement sensors are preferably arranged to detect rotational movements. One or more of the movement sensors may be arranged to detect a combination of rotational and translational movements. The rotational movement may be with respect to a user or with respect to the device itself.

By detecting rotational movement, one embodiment of the digital device will be configured to provide panoramic scrolling by detecting X/Y plane rotation and using the detection of this rotational movement to scroll the image on the viewing screen in the appropriate panoramic direction. In a preferred embodiment, the device would be arranged to provide full 360 degrees panoramic scrolling.

By detecting rotational movement in the Z direction, a further embodiment of the digital device will be configured to detect pitching/yawing of the device. In such a case, the digital device may be configured to perform a zooming or scrolling operation based on pitching or yawing movement of the device. In another case, the rotational Z direction movement can be used to change perspective on the image being viewed i.e. the angle at which the image is viewed. Thus, this embodiment is not limited to viewing the image from a single perspective, such as a plan view of the image which is common in the prior art. In an embodiment combined with full translational/rotational X/Y direction detection and control, the device will be configured to permit a user to look up, down and around an image from a multitude of angles.

In a further embodiment, the display operation may be the selection of a user option. Accordingly, a user may be provided with a number of options on the viewing screen, and selection of the option conducted by movement of the digital device itself in a particular direction. For example, a user may select a TV channel from a number of channel options provided on the viewing screen by scrolling through the options using Y direction movement of the device, and selecting the required option by moving the device in the Z direction. In another example configured for use with a computer, a cursor is placed over a document folder displayed on the viewing screen using conventional means, such as cursor keys, and the folder is opened by pitching movement of the device in the Z direction. This embodiment can be applied to any operation performed in the prior art by a "clicking" or "double-clicking" operation of a mouse e.g. actuation of a button bar.

Preferably, in another embodiment of the invention, the digital device comprises key/voice command means to control actuation of the or each movement sensor. Actuation may be activation and/or deactivation of the movement sensor. In the case of key command actuation, the movement sensors may be actuated only during depression of the key command means. Thus, only when the or each movement sensor has/have been activated by operation of the key/voice command means will the digital device scroll/zoom the image based on changes in X/Y/Z position. The key/voice command means may be arranged such that operation of a single key/voice command will control the actuation of more than one movement sensor or, alternatively, separate key/voice command means may separately control actuation of each movement sensor.

The detection of directional movement by the or each movement sensor may include the detection of a to/fro action in a particular direction. Thus, for example, detection of a to/fro action, with the "to" action being in one direction, will scroll the image in that direction. The scrolling may continue until a further to/fro action, which may be a to/fro action with the "to" action in the opposing direction to the initial "to" direction. In the case of zoom control, zooming may be controlled with to/fro actions in the Z plane.

The or each movement sensor may be configured to detect the rate of change in direction and the device configured to correspondingly modify the rate at which the image is scrolled and/or zoomed. So, for example, one digital device may be configured to zoom in to the maximum magnification if the digital device is moved towards the user (in the Z plane) faster than a particular speed e.g. 0.03 m/s. In the case when the device is slowly (e.g. less than 0.03 m/s) moved towards the user, the digital device would progressively zoom in on the image. Corresponding embodiments which relate to scrolling in the X/Y plane, using the X/Y/Z position sensors, are also within the scope of the invention.

In one embodiment, the digital device comprises control means to switch between the various aforementioned arrangements of the digital device. Thus, a user may select the mode of operation of the device.

The image on the viewing screen may not occupy the entire viewing screen. For example, the display operation may be performed on an image within a "window", and the window may occupy only a portion of the full viewing screen. The image may be text or graphical information or a combination of both.

The device may be configured such that the direction of movement may be detected with respect to any initial orientation of the device. Key/voice command means may be used to configure the device to know that it is in a initial orientation position. However, the device may comprise one or more position sensors arranged to provide orientation information and thus allow the device to be physically oriented to a specific initial position prior to the movement of the device being used to control display operations.

The device may be arranged such that scrolling/zooming operations are perceived by a user to be incremental. Alternatively, they may be perceived by a user to be continuous.

Specific embodiments of the invention will be discussed below.

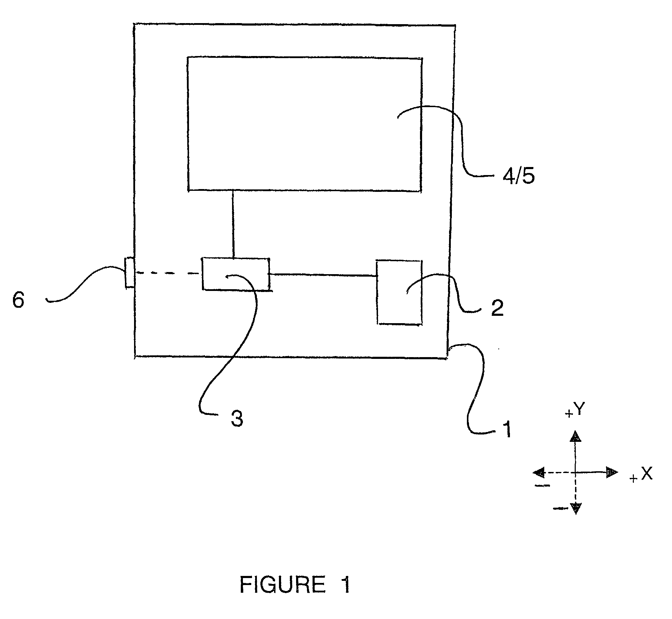

Figure 1 is a plan view of a schematic representation of two embodiments of a portable digital device 1 according to the invention. The device 1 comprises movement sensors 2 which detect (+/-) X, Y, Z and rotational movement of the device (Z direction movement is movement in/out of the plane of the paper). In a first embodiment, this movement information is received by the control means 3. The control means 3 is arranged to use this movement information to control an image displayed on the viewing screen 4 which is incorporated into the device 1. In a second embodiment, the information received by the control means 3 is arranged to be transmitted by transmission means 5 to control an image displayed on a viewing screen (not shown) which is separate to the device 1. In certain embodiments, the control means 3 may separately or additionally be arranged to control user selection operations. This may be facilitated by the use of user actuation means 6.

Consider the case of a hand held remote control device for a television. The television has a screen which is configured to display a number of options for user selection. The user operates the remote control of the invention by movement of the device in the X/Y/Z directions. For example, movement in one X direction may be used to select one option, whereas movement in the Y and Z directions may be used to select other options. Alternatively, X/Y direction movements of the remote control device may be used to move a cursor on the television screen to an appropriate selection field displayed on the screen and detection of a movement of the device in the Z direction used to select the option. To prevent inadvertent Z direction movement during X/Y direction movement of the device from prematurely making a selection, the device comprises an actuation button and corresponding mechanism which, upon depression of the button, isolates Z direction movement of the device from making a selection. On release of the button, X/Y direction movement of the device is isolated from moving the cursor on the screen, and Z direction movements allowed to initiate user selection. In this case, a further actuation button and corresponding mechanism would also be required to deactivate this facility of display operation controlled by movement of the device. This button would be used to prevent any inadvertent X/Y/Z movements from controlling display operations. These concepts can also be applied to assist a user operating a mobile phone or any other portable digital communications device. For example, it may be used to assist a user in making a selection from a list of phone numbers displayed on a mobile phone screen.

In another embodiment, the television remote control device is configured such that movement of the remote control in the X/Y direction scrolls the image on the display screen so that otherwise peripheral areas of the image can be viewed. This would be applicable to widescreen television transmissions to non-widescreen enabled televisions.

Consider another embodiment applied to a portable navigation device, which may also include a digital communication facility to allow a user to make/receive a telephone call. Such a device is configured to display a street map of a local area. The device also comprises X/Y/Z direction movement sensors which are configured to control scroll/zoom display operations on the image of the local area. Thus, by X/Y direction movements, the user can pan across the image of the local area, and Z direction movements can be used to zoom in/out of the image. The aforementioned actuation buttons may also conveniently incorporated into the navigation device.

In one embodiment, the navigation device comprises Z direction movement sensors arranged to detect full translation/rotational movement in the Z directions. The device is specifically configured to associate pitching Z rotation movements with a change in perspective of the image. Thus, in this case, a user is able to change the angle of view of the image by changing the pitch of the device. This embodiment would be useful in a portable computer games console, particularly in association with the X/Y direction scrolling/panning facility.

## Claims

1. A portable digital device comprising one or more movement sensors arranged to detect directional movement of the digital device, and wherein the digital device is further arranged to perform a display operation on an image displayed on a viewing screen based on the directional movement of the digital device detected by the or each movement sensor.

2. The portable digital device according to claim 1, wherein the viewing screen is part of the portable digital device.

3. The portable digital device according to claim 1, wherein the viewing screen is peripheral to the portable digital device.

4. The portable digital device according to any of the preceding claims, wherein one or more movement sensors are arranged to detect X/Y directional movements of the device and correspondingly scroll the image on the viewing screen in an appropriate direction.

5. The portable digital device according to claim 4, wherein movement sensors are provided to detect X and Y direction movements in combination, and the device is configured to pan across the image on the viewing screen based on the combined X/Y direction movement of the device.

6. The portable digital device according to any of the preceding claims, wherein the device comprises one or more Z direction movement sensors arranged to detect changes in the Z plane position of the digital device and correspondingly zoom in and/or out on the viewing screen image based on the change in the Z plane position of the digital device detected by the or each Z direction movement sensor.

7. The portable digital device according to any of the preceding claims, wherein the digital device comprises one or more Z direction movement sensors arranged to detect changes in the Z plane position of the digital device and arranged to scroll the image on the viewing screen in the X/Y direction based on the change in the Z plane of the digital device detected by the or each Z direction movement sensor.

8. The portable digital device according to any of the preceding claims, wherein one or more of the movement sensors are arranged to detect rotational movements.

9. The portable digital device according to claim 8, wherein the digital device is configured to provide panoramic scrolling by detecting X/Y plane rotation and using the detection of this rotational movement to scroll the image on the viewing screen in the appropriate panoramic direction.

10. The portable digital device according to claim 8 or claim 9, wherein the device is configured to perform zooming or scrolling operations based on detecting Z direction pitching/yawing of the device.

11. The portable digital device according to claim 8, 9 or claim 10, wherein the device is configured to change the viewed image perspective based on detecting Z direction pitching/yawing of the device.

12. The portable digital device according to any of the preceding claims, wherein the device is configured to perform a display operation which is a user selection operation on detection of movement of the device.

13. The portable digital device according to claim 12, wherein movement of the device in X/Y/Z directions perform separate user selection operations.

14. The portable digital device according to any of the preceding claims, wherein the digital device comprises key/voice command means to control actuation of the or each movement sensor.

15. The portable digital device according to any of the preceding claims, wherein the detection of directional movement by the or each movement sensor is the detection of a to/fro action in a particular direction.

16. The portable digital device according to any of the preceding claims, wherein the or each movement sensor is configured to detect the rate of change in direction and the device is configured to correspondingly modify the rate at which the display operation is performed.

17. The portable digital device according to any of the preceding claims, wherein the digital device comprises control means to switch between the operation modes as defined in the previous claims.

18. The portable digital device according to any of the preceding claims, wherein the device is configured such that the direction of movement is detected with respect to any initial orientation of the device.

19. The portable digital device according to claims 1-18, wherein the device comprises key/voice command means arranged to be used to configure the device in a initial orientation position.

20. The portable device according to any of the preceding claims, wherein the device comprises one or more position sensors arranged to provide orientation information and thus allow the device to be oriented to a specific initial position.

21. A portable digital device as hereinbefore described.

22. A method of configuring a portable digital device as hereinbefore described.
